# FASCICULE DE BREVET EUROPEEN

(11) **EP 1 135 833 B1**
(45) Date de publication et mention de la délivrance du brevet: **04.09.2002**
(21) Numéro de dépôt: 99957356.1
(22) Date de dépôt: 03.12.1999
(51) Int. Cl.: H01R 13/631

(54) **AGENCEMENT POUR LE RACCORDEMENT AUTOMATIQUE DE DEUX CIRCUITS ELECTRIQUES D'UN VEHICULE AUTOMOBILE**
BAUWEISE FÜR DEN AUTOMATISIERTEN ANSCHLUSS VON ZWEI ELEKTRONISCHEN STROMKREISEN EINES KRAFTFAHRZEUGS
ARRANGEMENT FOR AUTOMATICALLY CONNECTING TWO ELECTRICAL SYSTEMS IN A MOTOR VEHICLE

(30) Priorité: 04.12.1998 FR 9815370
(43) Date de publication de la demande: 26.09.2001
(73) Titulaire: Renault s.a.s., 92100 Boulogne Billancourt (FR)
(72) Inventeur: CHALONS, Jean, F-92380 Garches (FR); DUPUIS, Guy, F-75017 Paris (FR)
(86) Numéro de dépôt international: FR9902999
(87) Numéro de publication internationale: WO00035055

(56) Documents cités:
- EP-A- 0 753 905
- US-A- 5 318 455
- US-A- 5 752 845

## Description

L'invention concerne un agencement permettant le raccordement automatique, à un circuit principal d'un véhicule, d'un circuit électrique auxiliaire associé à un sous-ensemble du véhicule.

L'invention concerne, entre autres, l'agencement pour le raccordement d'un circuit électrique auxiliaire associé à un siège de véhicule automobile notamment afin d'alimenter en énergie électrique différents équipements du siège et pour permettre l'échange de données, par exemple d'ordres de commande, entre le siège et des moyens centraux de commande et de détection.

Selon les conceptions actuelles de tels agencements, le siège à raccorder au circuit principal comporte un toron de câbles et fils électriques qui se termine par un élément auxiliaire de connecteur qui est prévu pour être accouplé à un élément principal de connecteur complémentaire agencé lui aussi à l'extrémité libre d'un toron électrique appartenant au circuit électrique principal du véhicule.

L'opération de raccordement par accouplement des deux éléments complémentaires de connecteur est une opération réalisée manuellement en chaîne de montage et d'assemblage. En effet, le siège avec ses glissières de réglage de sa position longitudinale dans le véhicule est monté sur le plancher du véhicule et les deux élément de connecteur sont ensuite accouplés manuellement par un opérateur selon une direction d'accouplement correspondant sensiblement à la direction des deux torons électriques, la retenue en position accouplée des deux éléments de connecteur, qui sont du type mâle/femelle, s'effectuant selon cette direction des torons et par des moyens à encliquetage.

Un tel agencement connu et le processus de connexion électrique par accouplement manuel qui en découle présentent de nombreux inconvénients.

Tout d'abord, il s'agit d'une opération qui ne peut être effectuée que manuellement, ce qui nécessite de faire appel à un opérateur et allonge les temps de montage.

Lorsque l'opération est effectuée manuellement par un opérateur, elle doit être accomplie dans des zones difficilement accessibles, ce qui aboutit à des postures délicates pour l'opérateur.

L'accouplement ou branchement des deux éléments au connecteur selon une direction correspondant à l'axe des torons électriques augmente l'encombrement global de l'agencement connu.

Enfin, la présence des torons de raccordement avec leur deux éléments de connecteur complémentaires est peu esthétique.

Le document US-A-5 752 845 décrit un agencement du type dans lequel le sous-ensemble est monté sur un élément de structure de la caisse du véhicule, notamment un plancher, selon une direction principale, notamment verticale, de montage, du type comportant un élément auxiliaire de connecteur électrique porté par le sous-ensemble et un élément principal complémentaire de connecteur porté par l'élément de structure du véhicule qui sont accouplés à l'issue de l'opération de montage du sous-ensemble, caractérisé en ce que l'élément auxiliaire de connecteur est un élément fixe porté par le sous-ensemble, et en ce que l'élément principal de connecteur est monté mobile par rapport à l'élément de structure entre une position de repos vers laquelle il est rappelé élastiquement et une position de connexion vers laquelle il est déplacé automatiquement par le sous-ensemble en fin de la course de montage de ce dernier.

L'invention propose un agencement de ce type dans lequel l'élément principal de connecteur est monté basculant par rapport à l'élément de structure autour d'un axe horizontal d'articulation, et l'élément auxiliaire de connecteur comporte une patte de commande qui coopère avec une partie en vis-à-vis de l'élément principal de connecteur pour faire pivoter ce dernier de sa position de repos vers sa position de connexion (voir la revendication 1). D'autres caractéristiques de l'invention se trouvent dans les revendications dépendantes 2 à 10:
- la patte de commande coopère avec une face supérieure du corps de l'élément principal de connecteur ;
- l'élément auxiliaire de connecteur comporte une face transversale arrière verticale de connexion, et l'élément principal de connecteur comporte une face transversale avant de connexion qui est parallèle à l'axe d'articulation et qui, en position de connexion, est sensiblement verticale et s'étend en regard de la face transversale arrière de connexion, les corps des deux éléments de connecteur s'étendant alors sensiblement longitudinalement dans le prolongement l'un de l'autre ;
- l'un au moins des éléments de connecteur comporte des éléments de connexion qui font saillie longitudinalement au delà de sa face transversale de connexion et qui sont compressibles élastiquement pour coopérer chacun avec un élément de contact correspondant, notamment un élément de contact fixe, agencé en vis-à-vis dans la face transversale de connexion de l'autre élément de connecteur ;
- l'élément principal de connecteur est porté par une platine intermédiaire sensiblement horizontale ;
- la position verticale de la platine, par rapport à l'élément de structure, est réglable automatiquement lors du montage du sous-ensemble sur l'élément de structure ;
- la platine intermédiaire est sollicitée élastiquement vers une position supérieure maximale de réglage ;
- la face supérieure de la platine intermédiaire comporte des moyens de centrage automatique, selon la direction transversale, du corps de l'élément auxiliaire de connecteur qui coopèrent avec la portion inférieure de celui-ci lors du montage du sous-ensemble ;
- la position longitudinale de la platine intermédiaire par rapport à l'élément de structure est réglable automatiquement lors du montage du sous-ensemble ;
- le corps de l'élément auxiliaire de connecteur est fixé sous une glissière de guidage en translation longitudinale d'un siège de véhicule automobile.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique simplifiée d'un agencement conforme aux enseignements de l'invention pour le raccordement électrique d'un siège de véhicule au circuit électrique principal de ce dernier, les principaux composants de l'agencement selon l'invention étant illustrés lors d'une première étape d'approche du siège lors des opérations d'assemblage et de montage ;
- la figure 2 est une vue similaire à celle de la figure 1 sur laquelle les composants sont illustrés dans une position correspondant à l'accostage de l'élément de connecteur principal basculant à l'élément auxiliaire de connecteur porté par le siège ;
- la figure 3 est une vue similaire à celles des figures 1 et 2 sur laquelle le siège est illustré en position montée avec les deux éléments de connecteur complémentaires illustrés en position accouplée ;

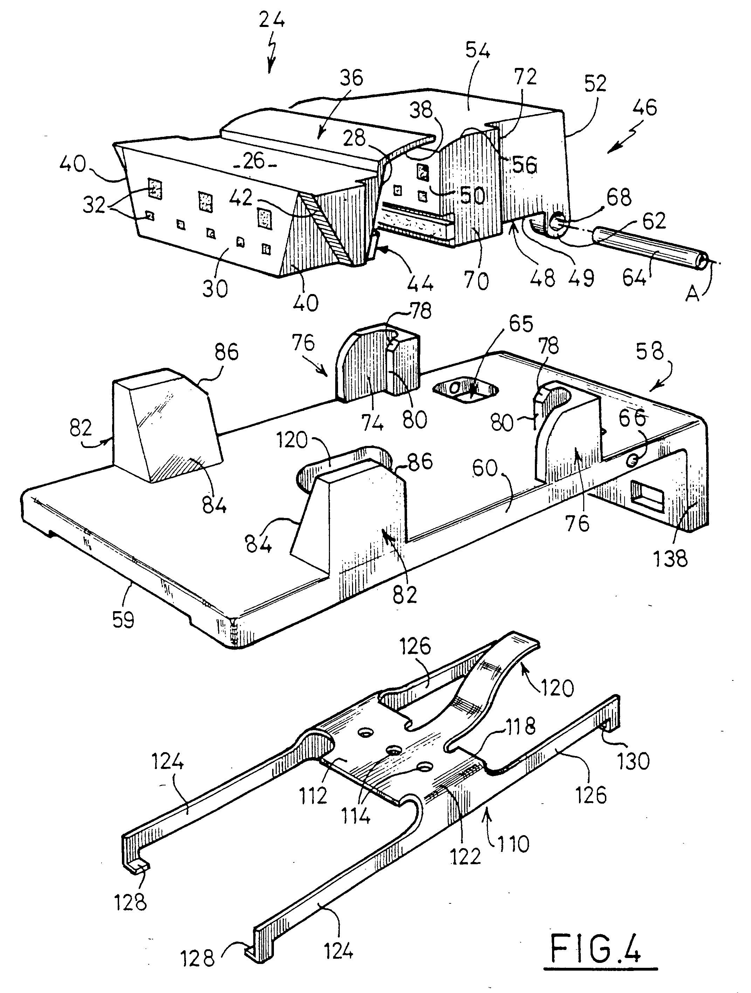

- la figure 4 est une vue schématique en perspective éclatée, de trois-quarts avant, de certains des composants de l'agencement selon l'invention ;
- la figure 5 est une vue schématique en perspective éclatée, de trois-quarts arrière, d'autres composants de l'agencement ; et
- la figure 6 est une vue de dessus de certains des composants de l'agencement selon l'invention.

Dans la description qui va suivre, on utilisera à titre non limitatif les termes "horizontal", "vertical", "inférieur", "supérieur", etc. en référence aux figures afin de simplifier la description et les revendications.

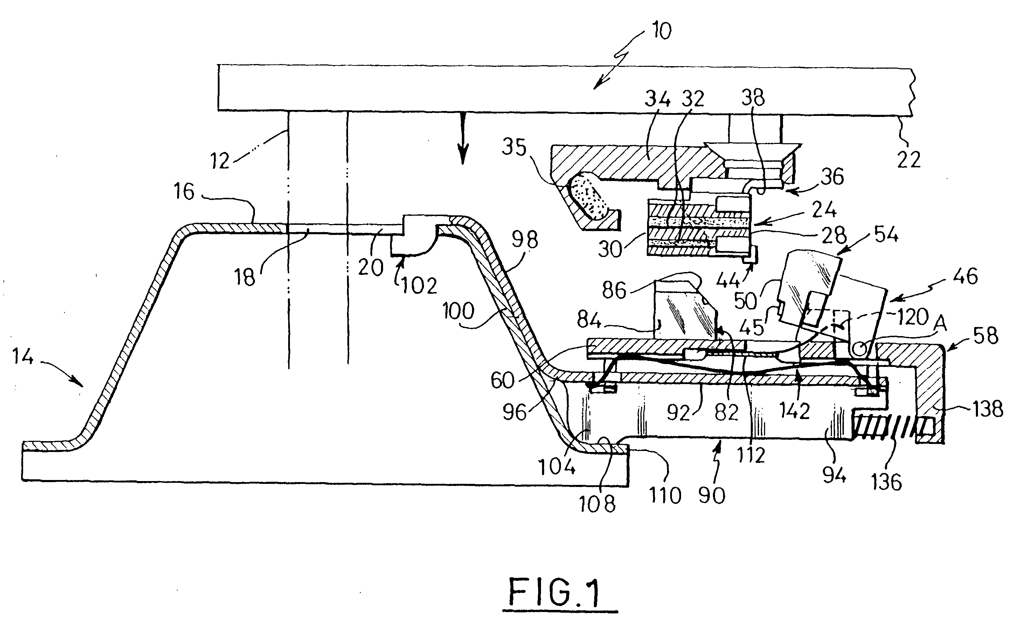

On a représenté aux figures 1 à 3 une glissière longitudinale 10 qui porte à sa partie supérieure, de manière réglable, un siège de véhicule (non représenté).

Le siège est en général équipé de deux glissières inférieures 10 qui, à l'issue des opérations de montage du siège sur le véhicule, sont fixées par exemple par des tiges filetées 12, sur un élément 14 de plancher du véhicule qui est ici représenté sous la forme d'une traverse en tôle qui présente sensiblement la forme d'un U renversé avec une face supérieure horizontale en forme de plaque 16 comportant par exemple un trou 18 pour le passage de la tige filetée 12 et deux fentes parallèles d'orientation longitudinale 20 dont le rôle sera expliqué par la suite.

Conformément aux enseignements de l'invention, une glissière 10 porte sous sa face inférieure 22 un élément auxiliaire de connecteur 24 dont le corps 26 est par exemple une pièce moulée en matériau isolant qui est délimitée par une face transversale avant 28 de connexion et par une face transversale, parallèle et verticale, avant 30 de raccordement électrique.

Des éléments de connexion électrique 32, illustrés de manière schématique sur les figures, débouchent dans la face transversale avant 30 de raccordement pour être raccordés, par sertissage ou par soudage, à des fils et câbles électriques appartenant à un toron 35 qui regroupe des fils et câbles du circuit électrique auxiliaire du siège, le toron 32 étant guidé et positionné par rapport à la glissière 10 et à l'élément auxiliaire de connecteur 24 par une pièce de guidage 34 permettant notamment d'orienter globalement le toron sous la glissière 10 jusqu'à l'élément auxiliaire de connecteur 24.

Le corps en matériau isolant 26 est fixé par sa partie supérieure sous la glissière 22 et il comporte une patte de commande 36 qui s'étend longitudinalement d'avant en arrière au delà de la face transversale avant de connexion 28 et dont la face inférieure plane 38, qui est ici d'orientation horizontale, constitue la face de commande des déplacements en basculement de l'élément principal de connecteur complémentaire qui sera décrit par la suite.

Le corps 26 est aussi délimité transversalement par deux faces latérales opposées 40 dont chacune comporte des rampes inclinées de guidage 42.

A son extrémité inférieure arrière, à droite en considérant les figures 1 à 3, l'élément auxiliaire de connecteur 24 comporte aussi au moins une patte ou ergot 44 de positionnement et de verrouillage.

L'élément auxiliaire de connecteur 24 est complémentaire d'un élément principal de connecteur 46 qui est lui aussi constitué pour l'essentiel par un corps en matériau isolant 48 de forme générale parallélépipédique rectangle délimité longitudinalement par une face transversale avant 50 de connexion et par une face transversale arrière 52 de raccordement à un toron (non représenté sur les figures) appartenant au circuit électrique principal du véhicule.

Le corps en matériau isolant 48 est délimité verticalement vers le haut par une face supérieure de commande 54 sensiblement horizontale dont la partie d'extrémité longitudinale avant 56 est bombée avec sa convexité orientée verticalement vers le haut pour coopérer avec la face inférieure 38 de la patte de commande 36.

Le corps 48 de l'élément principal de connecteur 46 est globalement monté basculant, autour d'un axe horizontal A agencé au voisinage de son extrémité inférieure arrière, sur une platine intermédiaire de montage 58.

La platine 58 se présente essentiellement sous la forme d'une plaque horizontale 60 qui comporte au voisinage de son extrémité longitudinale arrière deux trous 65 alignés transversalement dont chacun reçoit une patte d'articulation 62 de l'élément principal de connecteur 46, l'articulation étant réalisée par deux tiges d'articulation 64 dont chacune traverse des trous alignés transversalement 66 et 68 formés respectivement dans la plaque 60 et les pattes 62.

Le corps isolant 48 est délimité transversalement par deux faces longitudinales parallèles et opposées 70 qui sont délimitées vers l'arrière par deux faces verticales transversales 72 et qui sont prévues pour être reçues latéralement entre les faces internes opposées 74 appartenant à deux pattes arrière 76 de guidage de l'élément principal de connecteur 46 qui s'étendent verticalement au dessus de la plaque 60 de la platine intermédiaire 58.

Chaque patte 76 comporte aussi des chanfreins supérieurs 78 et des faces transversales verticales 80 de guidage qui sont prévues pour coopérer avec les faces 72 de l'élément principal de connecteur 46.

La face supérieure 61 de la plaque horizontale 60 de la platine intermédiaire 58 comporte deux autres pattes avant 82 de guidage de l'élément auxiliaire de connecteur 24 agencées longitudinalement au voisinage de son extrémité avant, dont chacune comporte une face interne 84 à deux pans inclinée de haut en bas vers l'intérieur pour constituer des rampes de centrage transversale de l'élément auxiliaire de connecteur 24 qui coopèrent avec ses faces latérales 40 et qui comporte des chanfreins supérieurs 86 prévus pour coopérer avec les rampes 42 de manière à déplacer longitudinalement l'élément auxiliaire de connecteur 24 d'avant en arrière lorsque celui-ci est introduit verticalement de haut en bas entre les pattes de guidage 82.

Le rapprochement longitudinal mutuel des deux éléments de connecteur auxiliaire 24 et principal 46 a pour but de rapprocher leurs faces transversales de connexion 28 et 50 afin d'amener en contact les éléments de connexion 32 portés par l'élément de connecteur auxiliaire 24 et les éléments de connexion 51 portés par l'élément principal de connecteur 46, ces éléments de connexion 32, 51 faisant de préférence respectivement saillie axialement vers l'arrière, respectivement vers l'avant, pour venir en contact mutuel à l'issue de l'opération d'accouplement des deux éléments de connecteur.

De préférence, selon une caractéristique de détail non représentée, au moins une série d'éléments de connexion 32 et/ou 51 est compressible axialement à l'encontre d'un effort élastique de rappel qui les sollicite dans le sens du raccordement, et ceci afin de garantir un bon contact électrique mutuel entre les éléments de connexion, et donc une bonne qualité de la connexion électrique.

La platine intermédiaire 58 est montée sur la traverse 14 avec interposition d'un support métallique 90 en tôle pliée et découpée en U renversé.

Le support 90 est constitué pour l'essentiel par une plaque horizontale supérieure 92 qui se prolonge par deux ailes latérales verticales 94 d'orientation longitudinale et, au delà de son bord d'extrémité longitudinale avant 96 par une plaque supérieure inclinée 98 d'appui qui s'étend en regard de la face transversale inclinée arrière 100 de la traverse 14, la plaque 98 se terminant par deux pattes avant d'accrochage 102 dont chacune est reçue en coulissement longitudinal dans une fente 20, la conformation des pattes 102 étant telle qu'elles retiennent verticalement dans les deux sens le support 90 par rapport à la traverse 14.

L'appui vertical du support 90 sur la traverse 14, afin de maintenir la plaque supérieure 92 selon un plan sensiblement horizontal, est complété par deux pieds avant 104 dont chacun appartient à une aile 94 et prend appui verticalement sur la face supérieure 106 d'une aile longitudinale horizontale arrière 108 de la traverse 14.

Compte tenu des tolérances de fabrication des différentes pièces, il est prévu un léger jeu longitudinal au niveau des pattes d'accrochage 102 et des fentes 20 induisant une faculté de réglage en position longitudinale du support métallique 90 par rapport à la traverse fixe 14.

Une pièce métallique 110 est interposée verticalement entre la face inférieure de la plaque horizontale 60 de la platine intermédiaire 58 et la face supérieure de la plaque horizontale 92 du support 90.

La pièce 110 a pour fonction de retenir verticalement la platine intermédiaire 58 par rapport au support 90 avec une capacité de réglage de la position verticale de la platine par rapport au support, et de solliciter élastiquement en permanence l'élément principal de connecteur 46 monté basculant sur la platine 58, et ceci dans le sens horaire en considérant la figure 1.

A cet effet, la pièce intermédiaire 110 formant ressort de basculement comporte une plaque horizontale supérieure 112 qui est prévue pour être fixée par exemple par sertissage à chaud de tétons (non représentés) s'étendant verticalement sous la plaque en matière plastique 60 de la platine intermédiaire 58 dans des trous correspondants 114 de la plaque 112.

Ainsi, la plaque 112 est rendue solidaire de la platine intermédiaire 58.

A partir de la plaque 112, la pièce 110 comporte une lame 120 formant ressort qui s'étend, à partir d'un bord transversal arrière 118, vers l'arrière et verticalement vers le haut par rapport au plan de la plaque 112 à travers une ouverture en forme de lumière longitudinale 121 de la plaque 60 de la platine intermédiaire 58 pour venir coopérer avec une portion en vis-à-vis de la face inférieure 49 du corps isolant 48 de l'élément principal de connecteur 46 pour solliciter ce dernier en basculement autour de l'axe A dans le sens horaire en considérant la figure 1.

A partir de ses bords longitudinaux parallèles 122, la plaque 112 comporte deux ailes latérales verticales 123 qui s'étendent vers le bas et dont chacune se prolonge par deux branches longitudinales opposées avant 124 et arrière 126 dont chacune se termine par une patte de retenue 128, 130 qui s'étend transversalement vers l'intérieur dans un plan horizontal.

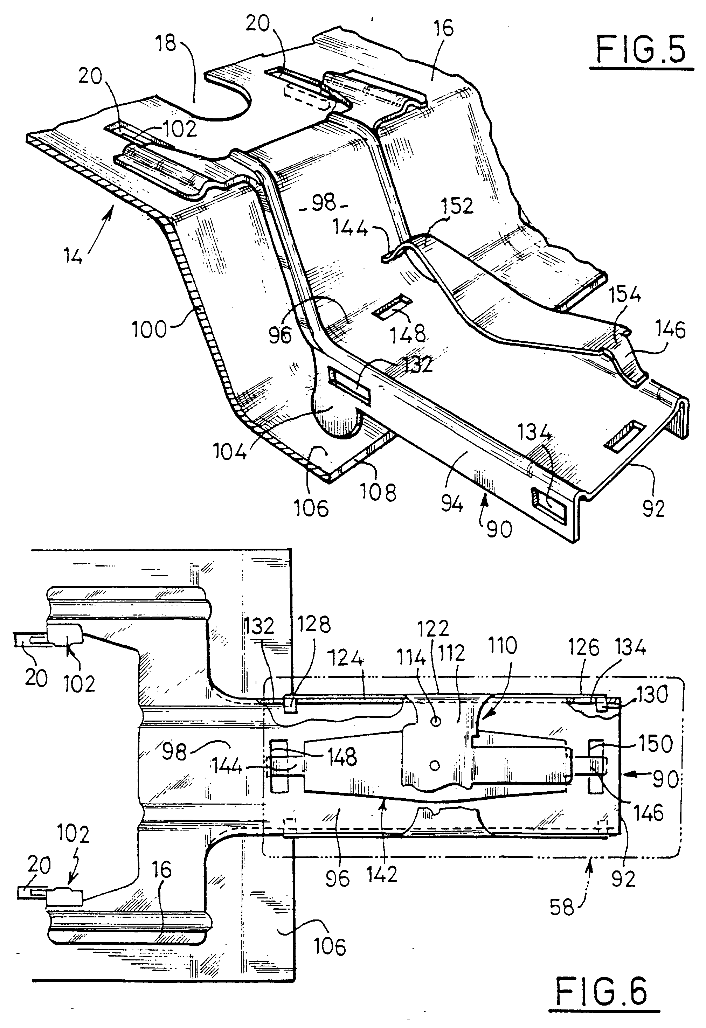

L'écartement transversal des ailes 123 est tel que la pièce intermédiaire 110 chevauche, comme on peut le voir notamment à la figure 6, verticalement la plaque horizontale 92 du support 90.

Dans leur état libre de repos, les branches longitudinales 124 et 126 sont resserrées transversalement vers l'intérieur et, lors du montage de la pièce 110 sur le support 90, elles sont légèrement écartées transversalement de manière à garantir que les pattes 128 et 130 pénètrent chacune dans une fente complémentaire 132, 134 qui sont des fentes horizontales d'orientation longitudinale formées dans les ailes latérales verticales 94 du support 90.

La hauteur et la longueur des fentes 132 et 134 sont telles qu'elles permettent ainsi un réglage de la position de la platine intermédiaire 58 par rapport au support 90, la platine 58 étant sollicitée élastiquement par rapport au support 90 par des ressorts 136 (voir figure 1) qui sont interposés entre les ailes 94 et une portion en vis-à-vis d'une plaque verticale d'extrémité arrière 138 de la platine intermédiaire 58.

La platine 58 est sollicitée élastiquement en permanence vers le haut par rapport au support 90 dans une position supérieure de réglage par au moins un ressort intermédiaire 142 qui est ici un ressort à lame d'orientation longitudinale et conformé en V dont les extrémités longitudinales avant 144 et arrière 146 sont chacune reçue dans une encoche 148, 150 formée aux extrémités longitudinales opposées de la plaque horizontale 92 du support 90.

Les extrémités supérieures bombées 152 et 154 du ressort intermédiaire 142 coopèrent en permanence avec une portion en vis-à-vis de la face inférieure 59 de la plaque 60 de la platine intermédiaire 58, le ressort 142 étant en permanence comprimé verticalement pour solliciter verticalement vers le haut la platine 58 avec les pattes d'accrochage 128 et 130 qui assurent la retenue verticale vers le haut de la platine 58 par rapport au support 90.

On décrira maintenant le fonctionnement de l'agencement selon l'invention lors du montage du siège en se référant notamment aux figures 1 à 3.

En partant de la position illustrée à la figure 1, le siège avec ses glissières 10 et l'élément auxiliaire de connecteur fixe 24 descend verticalement par rapport à la traverse 14, et donc par rapport à la platine intermédiaire 58 qui porte l'élément principal de connecteur basculant 46 qui est dans sa position haute illustrée à la figure 1 dans laquelle sa face transversale avant de connexion 50 n'est pas verticale, mais légèrement inclinée formant un angle ouvert vers le haut.

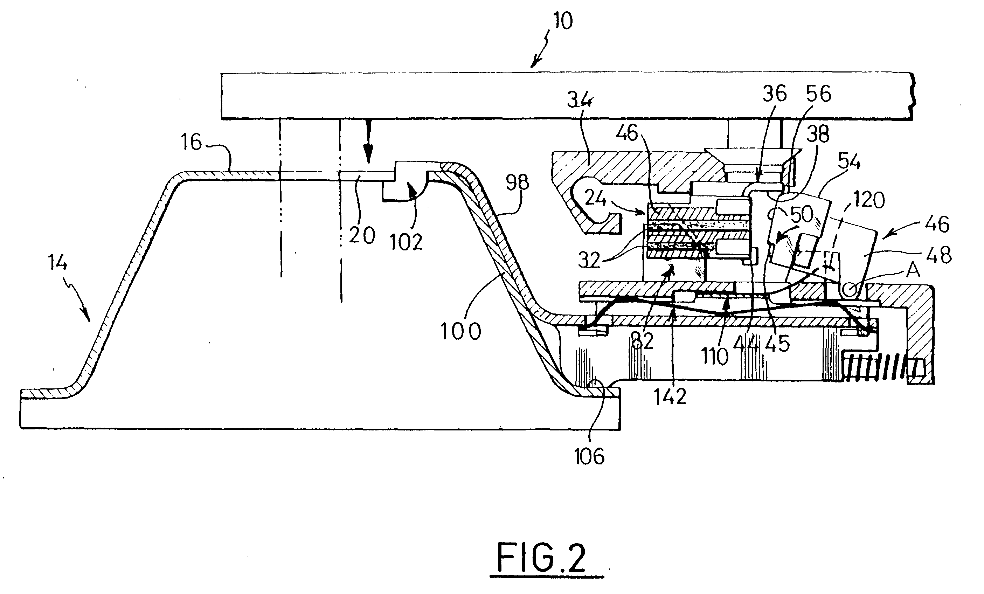

Le mouvement de descente du siège avec ses glissières 10 par rapport à la traverse 14 se poursuit jusqu'à la position d'accostage des éléments de connecteur 24 et 86 illustrée à la figure 2.

Au cours de ce mouvement de descente, le corps 26 de l'élément auxiliaire de connecteur 24 est centré transversalement par les pattes 82 et la coopération des chanfreins 46 avec les rampes 42 provoque son déplacement longitudinal relatif d'avant en arrière par rapport à la platine 58.

La face inférieure 38 de la patte de commande 36 vient aussi accoster la partie convexe bombée 56 de la face supérieure 54 de l'élément principal de connecteur basculant 46 pour provoquer progressivement le basculement, dans le sens anti-horaire en considérant les figures 1 à 3, de son corps 48 autour de l'axe A.

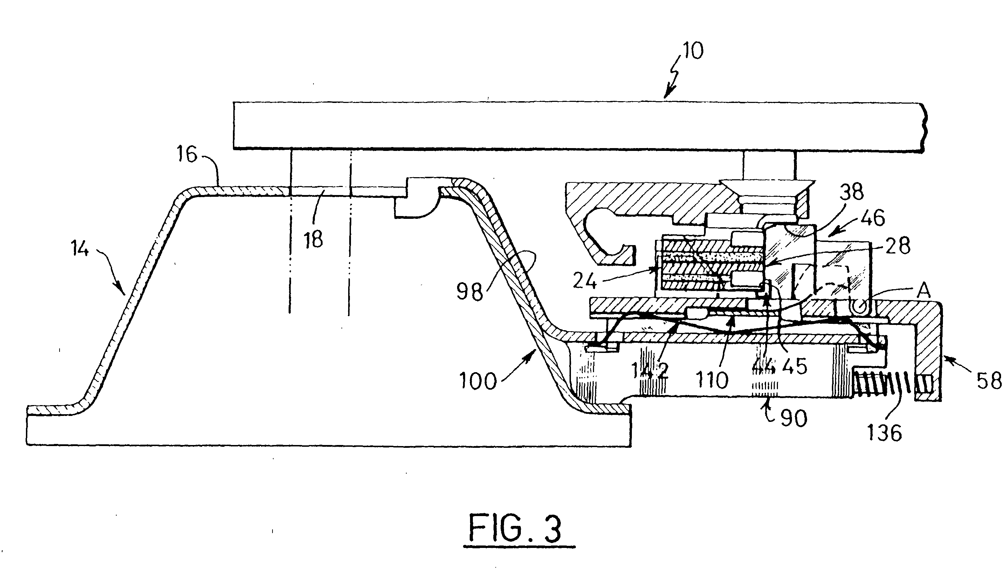

Le mouvement de descente se poursuit jusqu'à aboutir à la position de connexion illustrée à la figure 3 dans laquelle les deux éléments de connecteur 24 et 46 sont accouplés, c'est-à-dire que les éléments de connexion qu'il porte et qui sont saillie dans leurs faces transversales de connexion arrière 28 et avant 50 sont en contact électrique.

Le mouvement de basculement du connecteur 46 est terminé et les faces transversales 28 et 50 sont toutes les deux d'orientation verticale.

A la fin du mouvement de basculement pour aboutir à la position illustrée à la figure 3, les ergots 44 sont reçus dans des encoches complémentaires 45 formées à l'extrémité longitudinale inférieure avant du corps 48 de l'élément principal du connecteur 46.

Les différentes capacités de réglage en position verticale et longitudinale de la platine intermédiaire 58 par rapport au support 90 permettent de garantir un bon raccordement électrique quelles que soient les dispersions et tolérances de fabrication et de montage des différents composants de l'agencement selon l'invention.

Le ressort intermédiaire 142 peut ainsi être légèrement comprimé tandis que la platine 58 peut se déplacer longitudinalement par rapport au support 90.

La connexion électrique s'effectue ainsi de manière automatique permettant notamment de réaliser les opérations de montage du siège de manière robotisée.

A l'issue de la première phase d'accostage, les deux corps des éléments de connecteur 24 et 46 sont alignés longitudinalement. Leur position finale d'accouplement illustré à la figure 3 étant telle qu'ils s'étendent globalement longitudinalement sur le prolongement l'un de l'autre, en réduisant ainsi globalement l'encombrement vertical des moyens de connexion électrique.

L'invention n'est pas limitée à l'application d'agencement de raccordement électrique à un siège de véhicule mais peut trouver à s'appliquer à tout autre sous-ensemble dont on veut réaliser un assemblage automatique tout en garantissant une bonne précision de raccordement électrique malgré les tolérances et dispersions de fabrication.

Dans le cas d'un siège, il est aussi possible de prévoir plusieurs agencements de connexion électrique pour un même siège en fonction du nombre d'équipements électriques qui équipent celui-ci.

## Revendications

1. Agencement pour le raccordement, à un circuit électrique principal d'un véhicule, d'un circuit électrique auxiliaire associé à un sous-ensemble (10), tel que notamment un siège de véhicule automobile, pour l'alimentation d'équipements appartenant à ce sous-ensemble, du type dans lequel le sous-ensemble est monté sur un élément de structure (14) de la caisse du véhicule, notamment un plancher, selon une direction principale, notamment verticale, de montage, du type comportant un élément auxiliaire de connecteur électrique (24) porté par le sous-ensemble (10) et un élément principal complémentaire de connecteur (46) porté par l'élément de structure (14) du véhicule qui sont accouplés à l'issue de l'opération de montage du sous-ensemble, du type dans lequel l'élément auxiliaire de connecteur (24) est un élément fixe porté par le sous-ensemble (10), et l'élément principal de connecteur (46) est monté mobile par rapport à l'élément de structure (14) entre une position de repos vers laquelle il est rappelé élastiquement (110, 120) et une position de connexion vers laquelle il est déplacé automatiquement par le sous-ensemble (10, 24, 36) en fin de la course de montage de ce dernier, **caractérisé en ce que** l'élément principal de connecteur (46) est monté basculant par rapport à l'élément de structure (14) autour d'un axe horizontal (A) d'articulation, et **en ce que** l'élément auxiliaire de connecteur (24) comporte une patte de commande (36, 38) qui coopère avec une partie en vis-à-vis (54, 56) de l'élément principal de connecteur (46) pour faire pivoter ce dernier de sa position de repos vers sa position de connexion.

2. Agencement selon la revendication précédente, **caractérisé en ce que** la patte de commande (136, 138) coopère avec une face supérieure (54, 56) du corps de l'élément principal de connecteur (46).

3. Agencement selon l'une des revendications 1 ou 2, **caractérisé en ce que** l'élément auxiliaire de connecteur (24) comporte une face transversale arrière verticale (28) de connexion, et **en ce que** l'élément principal de connecteur (46) comporte une face transversale avant de connexion (50) qui est parallèle à l'axe d'articulation (A) et qui, en position de connexion, est sensiblement verticale et s'étend en regard de la face transversale avant de connexion (28), les corps (26, 48) des deux éléments de connecteur (24, 46) s'étendant alors sensiblement longitudinalement dans le prolongement l'un de l'autre.

4. Agencement selon la revendication précédente, **caractérisé en ce que** l'un au moins des éléments de connecteur (24, 46) comporte des éléments de connexion (32, 51) qui font saillie longitudinalement au delà de sa face transversale de connexion (28, 50) et qui sont compressibles élastiquement pour coopérer chacun avec un élément de contact correspondant, notamment un élément de contact fixe, agencé en vis-à-vis dans la face transversale de connexion de l'autre élément de connecteur.

5. Agencement selon l'une quelconque des revendications précédentes, **caractérisé en ce que** l'élément principal de connecteur (46) est porté par une platine intermédiaire (58, 60) sensiblement horizontale.

6. Agencement selon la revendication précédente, **caractérisé en ce que** la position horizontale de la platine (58), par rapport à l'élément de structure (14), est réglable automatiquement lors du montage du sous-ensemble sur l'élément de structure.

7. Agencement selon la revendication précédente, **caractérisé en ce que** la platine intermédiaire (58) est sollicitée élastiquement (142) vers une position supérieure maximale de réglage.

8. Agencement selon l'une quelconque des revendications 5 à 7, **caractérisé en ce que** la face supérieure de la platine intermédiaire (58) comporte des moyens (82) de centrage automatique, selon la direction transversale, du corps (26) de l'élément auxiliaire de connecteur (24) qui coopèrent avec la portion inférieure de celui-ci lors du montage du sous-ensemble (10).

9. Agencement selon l'une quelconque des revendications 5 à 8, **caractérisé en ce que** la position longitudinale de la platine intermédiaire (58) par rapport à l'élément de structure (14) est réglable automatiquement lors du montage du sous-ensemble.

10. Agencement selon l'une quelconque des revendications précédentes, **caractérisé en ce que** le corps (26) de l'élément auxiliaire de connecteur (24) est fixé sous une glissière (10) de guidage en translation longitudinale d'un siège de véhicule automobile.

## Patentansprüche

1. Anordnung zur Verbindung eines zusätzlichen elektrischen Stromkreises für eine Unteranordnung (10), insbesondere für einen Kraftfahrzeugsitz, mit einem Hauptstromkreis eines Fahrzeugs zur Versorgung von Ausrüstungen der Unteranordnung, wobei die Unteranordnung auf einem Halteteil (14) der Karosserie des Fahrzeugs, insbesondere dem Boden, befestigt wird in einer, insbesondere senkrechten, Einbaurichtung und die einen elektrische Zusatzstecker (24) aufweist, der von der Unteranordnung (10) getragen wird, sowie einen daran angepassten Hauptstecker (46), der vom Halteteil (14) des Fahrzeugs getragen wird und die am Ende des Einbauvorgangs der Unteranordnung miteinander verbunden werden, wobei der Zusatzstecker (24) ein fest mit der Unteranordnung (10) verbundenes Bauteil ist und der Hauptstecker (46) beweglich relativ zum Halteteil (14) angeordnet ist zwischen einer Ruhestellung, in deren Richtung er elastisch beaufschlagt wird (110, 120) und einer Verbindungsstellung, in deren Richtung er automatisch durch die Unteranordnung (10, 24, 36) am Ende des Einbauvorgangs der letzteren verschoben wird, **dadurch gekennzeichnet, dass** der Hauptstecker (46) verschwenkbar relativ zum Halteteil (14) um eine waagrechte Gelenkachse (A) angeordnet ist und dass der Zusatzstecker (24) eine Steuerlasche (36, 38) aufweist, die mit einem gegenüber liegenden Abschnitt (54, 56) des Hauptsteckers (46) zusammen wirkt um letzteren aus seiner Ruhestellung in die Verbindungsstellung zu verschwenken.

2. Anordnung nach dem vorhergehenden Anspruch, **dadurch gekennzeichnet, dass** die Steuerlasche (36, 38) mit einer oberen Fläche (54, 56) des Hauptsteckers (46) zusammen wirkt.

3. Anordnung nach einem der Ansprüche 1 oder 2, **dadurch gekennzeichnet, dass** der Zusatzstecker (24) eine hintere senkrechte Querfläche der Verbindung (28) aufweist und dass der Hauptstecker (46) eine vordere Querfläche der Verbindung (50) aufweist, die parallel zur Gelenkachse (A) ist und die, in Verbindungsstellung, im wesentlichen senkrecht angeordnet ist und sich gegenüber der vorderen Querfläche der Verbindung (28) erstreckt, sodass sich die beiden Körper (26, 48) der beiden Stecker (24, 46) im wesentlichen in Längsrichtung in ihren Verlängerungen erstrecken.

4. Anordnung nach dem vorhergehenden Anspruch, **dadurch gekennzeichnet, dass** wenigstens einer der Stecker (24, 46) Verbindungselemente (32, 51) aufweist, die sich in Längsrichtung aus seiner Querfläche der Verbindung (28, 50) heraus erstrecken und die elastisch zusammendrückbar sind um jeweils mit einem angepassten Kontaktelement, insbesondere einem feststehenden Kontaktelement, zusammen zu wirken, das auf der gegenüber liegenden Querfläche der Verbindung des anderen Steckers ausgebildet ist.

5. Anordnung nach einem der vorhergehenden Ansprüche, **dadurch gekennzeichnet, dass** der Hauptstecker (46) von einer im wesentlichen waagrechten Zwischenplatine (58, 60) getragen wird.

6. Anordnung nach dem vorhergehenden Anspruch, **dadurch gekennzeichnet, dass** die waagrechte Stellung der Platine (58) relativ zum Halteteil (14) automatisch während des Einbaus der Unteranordnung auf dem Halteteil einstellbar ist.

7. Anordnung nach dem vorhergehenden Anspruch, **dadurch gekennzeichnet, dass** die Zwischenplatine (58) elastisch (142) in Richtung einer oberen Maximalstellung der Einstellung beaufschlagt wird.

8. Anordnung nach einem der Ansprüche 5 bis 7, **dadurch gekennzeichnet, dass** die obere Fläche der Zwischenplatine (58) eine Anordnung (82) zur automatischen Zentrierung in Querrichtung für denn Körper (26) des Zusatzsteckers (24) aufweist, die mit seinem unteren Abschnitt während des Einbaus der Unteranordnung (10) zusammen wirkt.

9. Anordnung nach einem der Ansprüche 5 bis 8, **dadurch gekennzeichnet, dass** die Längsstellung der Zwischenplatine (58) relativ zum Halteteil (14) automatisch während des Einbaus der Unteranordnung einstellbar ist.

10. Anordnung nach einem der vorhergehenden Ansprüche, **dadurch gekennzeichnet, dass** der Körper (26) des Zusatzsteckers (24) unterhalb einer Führungsschiene (10) für die Längsverschiebung eines Kraftfahrzeugsitzes angeordnet ist,

## Claims

1. Arrangement for the connection, to a main electric circuit of a vehicle, of an auxiliary electric circuit connected to a sub-assembly (10), such as, in particular, a seat of an automotive vehicle, for supplying fittings belonging to said sub-assembly of the type wherein the sub-assembly is mounted on a structural element (14) of the vehicle body, particularly a floor, according to a main mounting orientation, particularly a vertical one, of the type comprising an auxiliary electrical connector element (24) carried by the sub-assembly (10) and a complementary main connector element (46) carried by the structural element (14) of the vehicle, which are coupled together at the end of the operation of mounting the sub-assembly, of the type wherein the auxiliary connector element (24) is a fixed element carried by the sub-assembly (10) and the main connector element (46) is mounted in a manner such that is movable with respect to the structural element (14) between a resting position towards which it is returned elastically (110, 120) and a connection position towards which it is automatically displaced by the sub-assembly (10, 24, 36) at the end of the procedure of mounting said sub-assembly, **characterised in that** the main connector element (46) is mounted in a tilting manner with respect to the structural element (14) about a horizontal articulation axis (A), and **in that** the auxiliary connector element (24) comprises a control lug (36, 38) that cooperates with an opposite part (54, 56) of the main connector element (46) in order to make the latter pivot from its resting position towards its connection position.

2. Arrangement according to the preceding claim, **characterised in that** the control lug (136, 138) cooperates with an upper face (54, 56) of the body of the main connector element (46).

3. Arrangement according to one of claims 1 or 2, **characterised in that** the auxiliary connector element (24) comprises a vertical rear transverse connecting face (28), and **in that** the main connector element (46) comprises a front transverse connecting face (50) that is parallel to the axis of articulation (A) and that in the connection position is substantially vertical and extends opposite the front transverse connecting face (28), the bodies (26, 48) of the two connector elements (24, 46) thus extending substantially longitudinally as an extension one the other.

4. Arrangement according to the preceding claim, **characterised in that** at least one of the connector elements (24, 46) comprises connector elements (32, 51) that project longitudinally beyond its transverse connecting face (28, 50) and that can be compressed elastically in order to each cooperate with a corresponding contact element, particularly a fixed contact element arranged opposite in the transverse connecting face of the other connector element.

5. Arrangement according to any one of the preceding claims, **characterised in that** that the main connector element (46) is carried by a substantially horizontal intermediate plate (58, 60).

6. Arrangement according to the preceding claim, **characterised in that** the horizontal position of the plate (58) with respect to the structural element (14) is automatically adjustable when the sub-assembly is being mounted on the structural element.

7. Arrangement according to the preceding claim, **characterised in that** the intermediate plate (58) is elastically stressed (142) towards a maximum upper adjustment position.

8. Arrangement according to any one of claims 5 to 7, **characterised in that** the upper face of the intermediate plate (58) comprises automatic centring means (82), in the transverse direction, of the body (26) of the auxiliary connector element (24) that cooperate with the lower portion thereof when the sub-assembly is being mounted (10).

9. Arrangement according to any one of claims 5 to 8, **characterised in that** the longitudinal position of the intermediate plate (58) with respect to the structural element (14) is automatically adjustable when the sub-assembly is being mounted.

10. Arrangement according to any one of the preceding claims, **characterised in that** the body (26) of the auxiliary connector elements (24) is fixed below a slide rail (10) for guiding an automotive vehicle seat in longitudinal translation.
